# EUROPEAN PATENT APPLICATION

(11) **EP 4 455 316 A1**
(43) Date of publication of application: **30.10.2024**
(21) Application number: 22911906.0
(22) Date of filing: 21.12.2022
(51) Int. Cl.: C21D 8/12, C22C 38/02, C22C 38/04, H01F 1/147

(54) **GRAIN ORIENTED ELECTRICAL STEEL SHEET AND MANUFACTURING METHOD OF SAME**

(30) Priority: 22.12.2021 KR 20210184604
(71) Applicant: POSCO Co., Ltd, Pohang-si, Gyeongsangbuk-do 37859 (KR)
(72) Inventor: KO, Hyun-Seok, Pohang-si, Gyeongsangbuk-do 37859 (KR); SEO, Jin-Wook, Pohang-si, Gyeongsangbuk-do 37859 (KR); HAN, Minsoo, Pohang-si, Gyeongsangbuk-do 37859 (KR)
(74) Representative: Meissner Bolte Partnerschaft mbB
(86) International application number: PCT/KR2022/020912
(87) International publication number: WO 2023/121273

(57) **Abstract**

A method for manufacturing a grain oriented electrical steel sheet according to an exemplary embodiment of the present invention includes manufacturing a hot-rolled steel sheet by hot rolling a slab; subjecting the hot-rolled steel sheet to hot-rolled steel sheet annealing; subjecting the hot-rolled steel sheet annealed hot-rolled steel sheet to primary cold rolling; subjecting the primarily cold-rolled steel sheet to primary decarburization annealing; subjecting the decarburization-annealed steel sheet to secondary cold rolling; subjecting the secondarily cold-rolled steel sheet to secondary decarburization annealing; subjecting the secondarily decarburization-annealed steel sheet to primary non-oxidizing annealing of annealing the steel sheet at a temperature ranging from 1000°C to 1200°C and a dew point temperature of -20°C or lower; subjecting the primarily non-oxidizing annealed steel sheet to tertiary cold rolling; and subjecting the tertiarily cold-rolled steel sheet to secondary non-oxidizing annealing of annealing the steel sheet at a soaking temperature ranging from 800°C to 1000°C for 30 seconds to 5 minutes.

## Description

### [Technical Field]

The present invention relates to a grain oriented electrical steel sheet and a method for manufacturing the same. Specifically, the present invention relates to a grain oriented electrical steel sheet that has improved magnetic properties because it is manufactured through a plurality of cold rolling and decarburization annealing processes, and a method for manufacturing the same.

### [Background Art]

A grain oriented electrical steel sheet is a soft magnetic material that is composed of grains having a crystal orientation {110}<001 >, which is a so-called Goss orientation, and has excellent magnetic properties in a rolling direction.

Such a grain oriented electrical steel sheet is manufactured by heating a slab, rolling the slab to a final thickness through hot rolling, hot-rolled steel sheet annealing, and cold rolling, and then performing high-temperature annealing for primary recrystallization annealing and secondary recrystallization annealing.

In general, it can be said that a secondary recrystallization annealing process of the grain oriented electrical steel sheet is a process that consumes a lot of energy because a low temperature increase rate and a long period of purification annealing at a high temperature are required. Since the grain oriented electrical steel sheet having excellent magnetic properties is manufactured by forming secondary recrystallization through such an extreme process, the following difficulties occur in the process.

First, since a temperature deviation between an outer winding portion and an inner winding portion of a coil occurs due to heat treatment in a coil state, the same heat treatment pattern cannot be applied to each portion, resulting in a magnetic deviation between the outer winding portion and the inner winding portion. Second, various surface defects occur in processes of coating MgO on the surface after decarburization annealing and forming a base coating during high-temperature annealing, resulting in reduction in actual yield. Third, since the decarburized steel sheet subjected to the decarburization annealing is subjected to coiling in a form of a coil, high-temperature annealing, flattening annealing again, and insulating coating, a production process is divided into three stages, resulting in reduction in actual yield.

In order to overcome the process limitations, a technique using a normal grain growth without using a secondary recrystallization phenomenon by controlling decarburization annealing and a cold rolling reduction ratio has been proposed. However, a large number of Goss-oriented grains with a crystal orientation that exactly coincides with {110}<001> cannot be formed through continuous annealing due to a short heat treatment time of a few minutes, and there is a limitation in reducing an iron loss.

### [Disclosure]

### [Technical Problem]

A grain oriented electrical steel sheet and a method for manufacturing the same are provided. Specifically, provided are a grain oriented electrical steel sheet that has improved magnetic properties because it is manufactured through a plurality of cold rolling and decarburization annealing processes, and a method for manufacturing the same.

### [Technical Solution]

A method for manufacturing a grain oriented electrical steel sheet according to an exemplary embodiment of the present invention includes manufacturing a hot-rolled steel sheet by hot rolling a slab; subjecting the hot-rolled steel sheet to hot-rolled steel sheet annealing; subjecting the hot-rolled steel sheet annealed hot-rolled steel sheet to primary cold rolling; subjecting the primarily cold-rolled steel sheet to primary decarburization annealing; subjecting the decarburization-annealed steel sheet to secondary cold rolling; subjecting the secondarily cold-rolled steel sheet to secondary decarburization annealing; subjecting the secondarily decarburization-annealed steel sheet to primary non-oxidizing annealing of annealing the steel sheet at a temperature ranging from 1000°C to 1200°C and a dew point temperature of -20°C or lower; subjecting the primarily non-oxidizing annealed steel sheet to tertiary cold rolling; and subjecting the tertiarily cold-rolled steel sheet to secondary non-oxidizing annealing of annealing the steel sheet at a soaking temperature ranging from 750°C to 1050°C for 30 seconds to 5 minutes.

The slab may include 1.0 wt% to 4.0 wt% of Si, 0.1 wt% to 0.4 wt% of C, and a balance of Fe and unavoidable impurities.

The slab may further include 0.1 wt% or less of Mn and 0.005 wt % or less of S.

The hot-rolled steel sheet annealing may include decarburization.

In the hot-rolled steel sheet annealing, the annealing may be performed at a temperature ranging from 850°C to 1000°C and a dew point temperature of 70°C or lower.

In the primary decarburization annealing, the annealing may be performed at a temperature ranging 850°C to 1000°C and a dew point temperature ranging from 50°C to 70°C.

In the primary decarburization annealing, the annealing may be performed in an austenite single phase region or a region where a composite phase of ferrite and austenite is present.

After the primary decarburization annealing, an average diameter of grains may be 150 to 250 µm.

The primary decarburization annealing and the secondary cold rolling may be repeated two or more times.

In the secondary decarburization annealing, the annealing may be performed at a temperature ranging from 850°C to 1000°C and a dew point temperature of 50°C to 70°C.

In the secondary decarburization annealing, the annealing may be performed for 30 seconds to 5 minutes.

In the primary non-oxidizing annealing, the annealing may be performed for 30 seconds to 5 minutes.

The primary non-oxidizing annealing may further include subjecting the steel sheet to subsequent pickling.

In the secondary non-oxidizing annealing, the annealing may be performed in an atmosphere where a dew point temperature is -20°C or lower.

According to an exemplary embodiment of the present invention, there is provided a grain oriented electrical steel sheet in which grains in which a {111} plane forms an angle of 15° or less with a rolling surface of the steel sheet are continuously aligned in a strip shape, an aspect ratio of the strip shape is 10 or greater, and a density of the strip shapes is 5 to 1000 per 100 mm².

In the grain oriented electrical steel sheet according to an exemplary embodiment of the present invention, a density of grains in which the {111} plane forms the angle of 15° or less with the rolling surface of the steel sheet is 500 to 100,000 grains per 100 mm².

A fraction of grains having a grain diameter of 10 µm to 100 µm among all grains may be 20% to 99%.

In the grain oriented electrical steel sheet according to an exemplary embodiment of the present invention, a fraction of grains forming an angle of 15° or less with a Goss direction ({110}<001>) may be 10% to 95%.

The grain oriented electrical steel sheet according to an exemplary embodiment of the present invention may include 1.0 wt% to 4.0 wt% of Si, 0.005 wt% or less of C (excluding 0 wt%), and a balance of Fe and inevitable impurities.

The grain oriented electrical steel sheet according to an exemplary embodiment of the present invention may further include one or more of 0.1 wt% or less of Mn and 0.005 wt % or less of S.

The grain oriented electrical steel sheet according to an exemplary embodiment of the present invention utilizes a normal crystal growth and has excellent magnetic properties, especially low high-frequency iron loss.

In addition, since AlN and MnS are not used as a grain growth inhibitor, there is no need to heat the slab to high temperatures of 1300°C or higher.

In addition, there is no need to remove N and S, which are precipitates, so the purification annealing time can be relatively shortened, and productivity can be improved.

In addition, it is possible to provide a grain oriented electrical steel sheet having uniform magnetic properties in a width direction.

### [Description of the Drawings]

FIG. 1 is a photograph by an electron microscope obtained by analyzing a surface of a grain oriented electrical steel sheet manufactured using Inventive Material 5, in which {111}//ND grains are shown in blue.
FIG. 2 is a photograph by a an electron microscope obtained by analyzing a surface of a grain oriented electrical steel sheet manufactured using Inventive Material 5, in which Goss ({110}<001>) grains are shown in green.

### [Mode for Invention]

The terms such as first, second and third are used for describing, but are not limited to, various parts, components, regions, layers, and/or sections. These terms are used only to discriminate one part, component, region, layer or section from another part, component, region, layer or section. Therefore, a first part, component, region, layer or section described below may be referred to as a second part, component, region, layer or section without departing from the scope of the present invention.

The technical terms used herein are set forth only to mention specific exemplary embodiments and are not intended to limit the present invention. Singular forms used herein are intended to include the plural forms as long as phrases do not clearly indicate an opposite meaning. In the present specification, the term "including" is intended to embody specific characteristics, regions, integers, steps, operations, elements and/or components, but is not intended to exclude presence or addition of other characteristics, regions, integers, steps, operations, elements, and/or components.

When a part is referred to as being "above" or "on" another part, it may be directly above or on the other part or an intervening part may also be present. In contrast, when a part is referred to as being "directly above" another part, there is no intervening part present.

Unless otherwise defined, all terms including technical and scientific terms used herein have the same meanings as the meanings generally understood by one skilled in the art to which the present invention pertains. Terms, such as those defined in commonly used dictionaries, are to be interpreted as having meanings consistent with the relevant technical literature and the present disclosure, and are not to be interpreted as having idealized or overly formal meanings unless expressly so defined herein.

In addition, unless otherwise stated, % means wt%, and 1 ppm is 0.0001 wt%.

In an exemplary embodiment of the present invention, further including an additional element means that the additional element is substituted for a balance of iron (Fe) by an amount of additional element added.

Hereinafter, exemplary embodiments of the present invention will be described in detail so that one skilled in the art to which the present invention pertains can easily implement the present invention. As those skilled in the art would realize, the described embodiments may be modified in various different ways, all without departing from the spirit or scope of the present invention.

A method for manufacturing a grain oriented electrical steel sheet according to an exemplary embodiment of the present invention includes manufacturing a hot-rolled steel sheet by hot rolling a slab; subjecting the hot-rolled steel sheet to hot-rolled steel sheet annealing; subjecting the hot-rolled steel sheet annealed hot-rolled steel sheet to primary cold rolling; subjecting the primarily cold-rolled steel sheet to primary decarburization annealing; subjecting the decarburization-annealed steel sheet to secondary cold rolling; subjecting the secondarily cold-rolled steel sheet to secondary decarburization annealing; subjecting the secondarily decarburization-annealed steel sheet to primary non-oxidizing annealing of annealing the steel sheet at a temperature ranging from 1000°C to 1200°C and a dew point temperature of -20°C or lower; subjecting the primarily non-oxidizing annealed steel sheet to tertiary cold rolling; and subjecting the tertiarily cold-rolled steel sheet to secondary non-oxidation annealing of annealing the steel sheet at a soaking temperature ranging from 750°C to 1050°C for 30 seconds to 5 minutes.

Below, each step will be described in detail.

First, a slab is hot-rolled.

The slab may include 1.0 wt% to 4.0 wt% of Si, 0.1 wt% to 0.4 wt% of C, and a balance of Fe and unavoidable impurities.

The reason for limiting the composition is as follows.

Silicon (Si) reduces iron loss by reducing magnetic anisotropy of the electrical steel sheet and increasing specific resistance. If a content of Si is less than 1.0 wt%, the iron loss is deteriorated, and if the content of Si exceeds 4.0 wt%, brittleness is increased. Therefore, the content of Si in the slab and in the grain oriented electrical steel sheet after the final annealing step may be 1.0 to 4.0 wt%. More specifically, the content of Si may be 1.5 to 3.5 wt%.

Since a process in which carbon (C) in a central portion escapes into a surface is required so that Goss grains in the surface are diffused to the central portion during intermediate decarburization annealing and final decarburization annealing, a content of C in the slab may be about 0.1 to 0.4 wt%. More specifically, the content of C in the slab may be 0.15 to 0.3wt %. In addition, the amount of carbon in the grain oriented electrical steel sheet finally manufactured after the continuous annealing step in which the decarburization is completed may be 0.0050 wt% or less. More specifically, the amount of carbon may be 0.002 wt% or less.

The slab may further include 0.1 wt% or less of Mn and 0.005 wt % or less of S.

Mn and S form MnS precipitates, which inhibit growth of Goss grains diffusing to the central portion during the decarburization process. Therefore, it is preferable that Mn and S are not added. However, considering the inevitably mixed amount during a steelmaking process, it is possible to control Mn and S in the slab and the grain oriented electrical steel sheet after the final annealing step to 0.1 wt% or less and 0.005 wt% or less, respectively.

The balance includes Fe and inevitable impurities. The inevitable impurities are impurities to be mixed in the steelmaking process and the manufacturing process of the grain oriented electrical steel sheet and are well known in the art. Therefore, specific descriptions thereof will be omitted. Specifically, components such as Al, N, Ti, Mg, and Ca react with oxygen in the steel to form oxides, and thus are required to be strongly suppressed. Therefore, these components may be controlled to 0.005 wt% or less, respectively. In an exemplary embodiment of the present invention, the addition of elements other than the above-described alloy components is not excluded, and various elements may be included within a range in which the technical spirit of the present invention is not impaired. If additional components are included, they are included by replacing the balance of Fe.

More specifically, the slab may include 1.0 wt% to 4.0 wt% of Si, 0.1 wt% to 0.4 wt% of C, and a balance of Fe and inevitable impurities.

The slab may be heated before being hot-rolled. A slab heating temperature may range from 1100°C to 1350°C, which is higher than a usual heating temperature. If the temperature is high when heating the slab, a hot-rolled structure is coarsened, which adversely affects magnetic properties. However, even when a slab reheating temperature is high, the hot-rolled structure is not coarsened due to a relatively high content of carbon in the slab, and the slab is reheated at a higher temperature than that in a usual case, such that the method for manufacturing a grain oriented electrical steel sheet according to an exemplary embodiment of the present invention is more advantageous in the hot rolling.

In the hot-rolling, a hot-rolled sheet having a thickness of 1.5 to 4.0 mm may be manufactured by performing hot-rolling so that the hot-rolled sheet may be manufactured to have a final product thickness by applying an appropriate rolling ratio in the final cold-rolling step.

A hot rolling temperature or a cooling temperature is not particularly limited, and as an example for excellent magnetic properties, a hot rolling end temperature may be set to 950°C or lower, the hot rolled steel sheet may be quenched by water, which may be then coiled at 600°C or lower.

Next, the hot-rolled steel sheet is subjected to hot-rolled steel sheet annealing. In this case, the hot-rolled steel sheet annealing may include a decarburization process. Specifically, in the hot-rolled steel sheet annealing, the annealing may be performed at a temperature ranging from 850°C to 1,000°C and a dew point temperature of 70°C or lower. After the annealing described above, additional annealing may be performed at a temperature ranging from 1,000 to 1,200°C and a dew point temperature of 0°C or lower. After the hot-rolled steel sheet annealing, the hot-rolled steel sheet may be pickled.

Next, primary cold rolling is performed to manufacture a cold-rolled steel sheet.

In a usual manufacturing process of a grain oriented electrical steel sheet, it is known that it is effective to perform the cold rolling once at a high reduction ratio close to 90%. This is because it creates an advantageous environment for grain growth of only Goss grains among primary recrystallized grains. However, in the method for manufacturing a grain oriented electrical steel sheet according to an exemplary embodiment of the present invention, the Goss grains of the surface layer generated by the decarburization annealing and the cold rolling are internally diffused without using the abnormal grain growth of Goss orientation grains. Thus, it is advantageous to form Goss orientation grains so that a plurality of Goss orientation grains are distributed in the surface layer.

Accordingly, when the cold rolling is performed at a reduction ratio of 50% to 70% during the cold rolling, a large number of Goss textures may be formed in the surface layer. More specifically, the reduction ratio may be 55% to 65%.

Next, the primarily cold-rolled steel sheet is subjected to primary decarburization annealing. In this case, the decarburization annealing step may be performed in an austenite single phase region or a region where a composite phase of ferrite and austenite is present. Specifically, the annealing may be performed at a temperature ranging from 850°C to 1000°C and a dew point temperature ranging from 50°C to 70°C. In addition, the atmosphere may be a mixed gas atmosphere of hydrogen and nitrogen. Additionally, a decarburization amount in the decarburization annealing may be 0.0300 wt% to 0.0600 wt%. After the annealing described above, additional annealing may be performed at a temperature ranging from 1,000 to 1,200°C and a dew point temperature of 0°C or lower.

In such a primary decarburization annealing process, grains in the surface of the electrical steel sheet grow coarsely, but grains inside the electrical steel sheet remain as a fine structure. After such primary decarburization annealing, an average diameter of grains may be 150 µm to 250 µm. In this case, the grains are ferrite grains formed in the surface. In addition, the diameter of the grain refers to a diameter of an imaginary circle assumed as having the same area as the grain. A reference plane is a plane parallel to a rolled plane (ND plane).

Next, the primarily decarburization-annealed steel sheet is subjected to secondary cold rolling. Since the secondary cold rolling is the same as the primary cold rolling, a specific description thereof will be omitted.

The primary decarburization annealing step and the secondary cold rolling step may be performed repeatedly two or more times. By repeatedly performing the processes two or more times, a large number of Goss textures may be formed in the surface layer. In an exemplary embodiment of the present invention, the Goss texture refers to a texture forming an angle of 15° or less with the Goss direction. That is, the Goss texture refers to grains in which the rolling direction (RD direction) of the rolling surface (ND plane) of the steel sheet forms an angle of 15° or less with the {110}<001> direction of the grains.

Next , the secondarily cold-rolled steel sheet is subjected to secondary decarburization annealing.

In the secondary decarburization annealing step, the annealing is performed at a temperature ranging from 850°C to 1000°C and a dew point temperature ranging from 50°C to 70°C. Before the secondary annealing, the cold-rolled steel sheet undergoes decarburization annealing, and thus, an amount of remaining carbon is 40% to 60% of the weight of carbon in the slab. Therefore, in the secondary decarburization annealing step, as carbon escapes, the grains formed in the surface layer are diffused inside the steel sheet. In the secondary decarburization annealing step, the decarburization may be performed so that the amount of carbon in the steel sheet is 0.005 wt% or less. The atmosphere may be a mixed atmosphere of hydrogen and nitrogen.

In the secondary decarburization annealing step, the annealing may be performed for 30 seconds to 5 minutes. The decarburization may be sufficiently performed within the time range described above.

Next, the secondarily decarburization-annealed steel sheet is subjected to primary non-oxidizing annealing at a temperature ranging from 1000°C to 1200°C and a dew point temperature of -20°C or lower. If the secondarily decarburization-annealed steel sheet is additionally subjected to tertiary cold rolling without non-oxidizing annealing, sufficient grain growth is not achieved, which may cause a Goss fraction to be reduced. In addition, problems may occur in that not only wear of the rolling roll occurs due to a surface oxidation layer, but also productivity during rolling decreases. In an exemplary embodiment of the present invention, the Goss fraction can be improved through the first non-oxidizing annealing step, so that the magnetic properties can be further improved by tertiary cold rolling and heat treatment. More specifically, the annealing may be performed in an atmosphere of 99 vol% or more of hydrogen at a dew point temperature ranging from -50°C to -30°C.

In the primary non-oxidizing annealing, the annealing may be performed for 30 seconds to 5 minutes. In the time range described above, the growth of grains ({111 }//ND grains) in which the {111} plane form an angle of 15° or less with the rolling surface of the steel sheet can be sufficiently achieved.

After the first non-oxidizing annealing step, a step of pickling the steel sheet may be further included. The pickling step is further included, resulting in removal of the oxidation layer generated on the surface of the steel sheet during the first and second decarburization annealing processes. The oxidation layer remains on the surface even after rolling and interferes with movement of magnetic domains, adversely affecting the magnetic properties, so it can be removed through pickling. The pickling method is not particularly limited, but the pickling step may be performed by immersing the steel sheet in a solution of 3.0 to 22.0 wt% of hydrochloric acid for 15 to 200 seconds. In this case, the temperature of hydrochloric acid may be set to 50°C to 90°C. If a concentration of hydrochloric acid is too low or the immersion time is short, the oxidation layer present on the surface of the steel sheet may not be sufficiently removed, and if the concentration is too high or the immersion time is long, damage to the surface of the steel sheet may be caused beyond removal of the oxidation layer. More specifically, the pickling may be performed by immersing the steel sheet in a solution of 10.0 to 18.0 wt% of hydrochloric acid for 20 to 100 seconds.

Next, the primarily non-oxidizing annealed steel sheet is subjected to tertiary cold rolling. By performing the tertiary cold rolling, a steel sheet with a final thickness of 20 to 150 µm may be manufactured. When tertiary cold rolling is added, the density of {111}//ND grains increases, which may improve magnetic properties, especially reduce high-frequency iron loss.

Next, the tertiarily cold-rolled steel sheet may be subjected to secondary non-oxidizing annealing of annealing the steel sheet at a soaking temperature ranging from 750°C to 1050°C for 30 seconds to 5 minutes. The purpose of the secondary non-oxidizing annealing step is to grow grains beyond a certain size. With this, the density of {111}//ND grains increases, which can improve magnetic properties, especially reduce high-frequency iron loss. If the soaking temperature is too low or the soaking time is short, Goss grains may not develop properly. If the soaking temperature is too high or the soaking time is long, the Goss grains do not remain in a fine size that is advantageous in terms of high-frequency iron loss, but grow, and the fraction of Goss grains rather decreases during the growth process. More specifically, the soaking temperature of the secondary non-oxidizing annealing may range from 800°C to 1000°C. More specifically, the soaking temperature may be set to 900°C to 970°C.

In the secondary non-oxidizing annealing step, the annealing may be performed at a dew point temperature of -20°C or lower. If the dew point temperature is too high, an oxidation layer may form on the surface, which may adversely affect magnetic properties. More specifically, the annealing may be performed in an atmosphere of 99 vol% or more of hydrogen at a dew point temperature ranging from -50°C to -30°C.

The process from the primary cold rolling step to the secondary non-oxidizing annealing step may be performed as a continuous process. The continuous process means that there is no batch process of coiling and annealing the steel sheet in a coil shape. As described above, the primary decarburization annealing step to the secondary non-oxidizing annealing step are completed in a few minutes, so the continuous process is possible.

In this way, by adding the tertiary cold rolling step and adding the primary and secondary non-oxidizing annealing steps before and after the tertiary cold rolling step, the density of {111}//ND grains increases and the Goss fraction increases. This leads to an improvement in magnetic properties, and in particular, high-frequency iron loss is dramatically reduced.

In the grain oriented electrical steel sheet finally manufactured after completing the secondary non-oxidizing annealing step, a density of grains in which the {111} plane forms an angle of 15° or less with the rolling surface of the steel sheet is 500 to 100,000 grains per 100 mm². In an exemplary embodiment of the present invention, the grains in which the {111} plane forms an angle of 15° or less with the rolling surface of the steel sheet, that is, the {111}//ND grains, serve to reduce high-frequency iron loss by reducing the size of magnetic domains. If there are too few {111}//ND grains, the size of the magnetic domains may increase and the magnetic properties may be deteriorated. In contrast, if a large number of {111}//ND grains are formed, this may be problematic because the number of grains with the Goss orientation, which is advantageous for magnetic properties, is reduced. More specifically, the number of {111}//ND grains may be 1,000 to 50,000. More specifically, the number of {111}//ND grains may be 2,000 to 20,000. The reference plane is not greatly limited and may be a plane parallel to the rolling surface (ND plane). The density of {111}//ND grains may be formed to be high through the secondary non-oxidizing step described above. Since this has been described in detail in relation to the method for manufacturing a grain oriented electrical steel sheet described above, a redundant description will be omitted. The number of {111}//ND grains may be calculated starting from grains with a grain diameter of 5 µm or greater.

Grains in which the {111} plane forms an angle of 15° or less with the rolling surface of the steel sheet are continuously aligned in a strip shape. The density of the strip shapes may be 5 to 1,000 per 100 mm². If there are too few strip shapes, the effect of reducing the size of magnetic domains by the strip shape is difficult to sufficiently exhibit. If there are too many strip shapes, the number of grains with the Goss orientation, which is advantageous for magnetic properties, may decrease. More specifically, the density of the strip shapes may be 20 to 500 per 100 mm². More specifically, the density of the strip shapes may be 50 to 200 per 100 mm².

'Continuous' means that boundaries between the {111}//ND grains are adjoining and adjacent to each other. The strip shape refers to an elongated alignment with an aspect ratio of 10 or greater. Specifically, grains may be aligned in a size of 0.05 mm to 1.0 mm horizontally and 0.5 mm to 10 mm vertically. In this case, the horizontal direction may be perpendicular to the rolling direction. Each strip shape may include 10 to 300 {111}//ND grains. Such a strip shape serves to reduce high-frequency iron loss by reducing the size of magnetic domains. The strip shape is formed through a secondary non-oxidizing heat treatment step at locations of grain boundaries caused by rolling. Since this has been described in detail in relation to the method for manufacturing a grain oriented electrical steel sheet described above, a redundant description will be omitted.

In an exemplary embodiment of the present invention, a fraction of grains having a grain diameter of 10 µm to 100 µm among all grains may be 20% to 99%. This is because, in an exemplary embodiment of the present invention, the primary decarburization annealing and the secondary decarburization annealing and the primary non-oxidizing annealing and the secondary non-oxidizing annealing are performed in a short period of time. If annealing is performed for a long time, for example, one hour or longer through batch annealing as in the related art, the average grain diameter increases by 5 mm or greater, which is completely different from the grain diameter distribution of the grain oriented electrical steel sheet according to an exemplary embodiment of the present invention. More specifically, the fraction of grains having a grain diameter of 10 µm to 100 µm among all grains may be 50% or more. More specifically, the fraction of grains with a grain diameter of 10 µm to 100 µm among all grains may be 90% to 99%. These fine grains contribute to reducing high-frequency iron loss. The fraction of grains refers to a volume fraction, and an area of grains with the corresponding grain diameter is calculated in any cross section of the steel sheet, and is regarded as the volume fraction. In an exemplary embodiment of the present invention, the grain diameter of the grain may not vary in a thickness direction. The grain diameter of the grain is calculated as a diameter of an imaginary circle assumed as having the same area as the grain.

In the grain oriented electrical steel sheet according to an exemplary embodiment of the present invention, a fraction of grains forming an angle of 15° or less with a Goss direction ({110}<001>) may be 10% to 95%. The fraction of Goss grains also contributes to reducing high-frequency iron loss. More specifically, the fraction of Goss grains may be 50% to 90%. In an exemplary embodiment of the present invention, an area of grains with the corresponding orientation is calculated in any cross section of the steel sheet, and is regarded as the volume fraction. The fraction of Goss grains may not vary. In an exemplary embodiment of the present invention, by forming an elongated {111}//ND grain collection around grains with the Goss orientation, the magnetic domains formed by the grains with the Goss orientation can be finely divided using the strip-shaped {111}//ND grains, so high-frequency iron loss can be reduced.

In an exemplary embodiment of the present invention, the effects may be exhibited by the unique manufacturing process and the unique microstructure created by the manufacturing process rather than the alloy components of the grain oriented electrical steel sheet. Supplementarily describing the alloy components of the grain oriented electrical steel sheet, the grain oriented electrical steel sheet according to an exemplary embodiment of the present invention may include 1.0 wt% to 4.0 wt% of Si, 0.005 wt% or less of C (excluding 0 wt%), and a balance of Fe and inevitable impurities. In addition, the grain oriented electrical steel sheet according to an exemplary embodiment of the present invention may further include 0.1 wt% or less of Mn and 0.005 wt % or less of S. Since the descriptions of the alloy components of the grain oriented electrical steel sheet are the same as the descriptions of the alloy components of the slab described above, redundant descriptions will be omitted.

In an exemplary embodiment of the present invention, the grain oriented electrical steel sheet has excellent magnetic properties, especially low high-frequency iron loss. Specifically, W_{10/400} may be 10.00 W/kg or less. W_{2/5000} may be 11.00 W/kg or less. W_{0.5/20000} may be 5.00 W/kg or less. More specifically, W_{10/400} may be 6.00 to 10.00 W/kg. W_{2/5000} may be 8.00 to 11.00 W/kg. W_{0.5/20000} may be 2.00 to 5.00 W/kg.

An iron loss W_{10/400} is a magnitude of iron loss (W/kg) induced under conditions of 1.0 Tesla and 400 Hz. An iron loss W_{2/5000} is a magnitude of iron loss (W/kg) induced under conditions of 0.2 Tesla and 5000 Hz. An iron loss W_{0.5/20000} is a magnitude of iron loss (W/kg) induced under conditions of 0.05 Tesla and 20000 Hz.

Hereinafter, specific Examples of the present invention will be described. However, the following Examples are merely preferred Examples of the present invention, and the present invention is not limited to the following Examples.

### Examples

A slab containing 2.8 wt% of Si, 0.204 wt% of C, and a balance of Fe and inevitable impurities was heated at a temperature of 1,150°C and then hot-rolled, and hot-rolled steel sheet annealing was performed at an annealing temperature of 950°C and a dew point temperature of 60°C. Thereafter, the steel sheet was cooled and then pickled, and the cooled and pickled steel sheet was subjected to primary cold rolling at a reduction ratio of 65% to produce a cold-rolled steel sheet having a thickness of 0.8 mm.

The primarily cold-rolled steel sheet was subjected to primary decarburization annealing again at a temperature of 950°C for 80 seconds in a wet mixed gas atmosphere of hydrogen and nitrogen (dew point temperature of 60°C), which was then subjected to secondary cold rolling again at a reduction ratio of 65% to produce a secondarily cold-rolled steel sheet having a thickness of 0.28 mm.

Thereafter, the secondarily cold-rolled steel sheet was subjected to secondary decarburization annealing at a temperature of 950°C for 2 minutes in a wet mixed gas atmosphere of hydrogen and nitrogen (dew point temperature of 60°C), which was then continuously subjected to primary non-oxidizing annealing at 1100°C for 3 minutes in a hydrogen atmosphere (dew point temperature of -40°C). Thereafter, the primarily non-oxidizing annealed steel sheet was subjected to pickling in an HCl solution with a concentration of 18.5 mass% at 80°C for 30 seconds, resulting in removal of the oxidation layer on the surface.

The pickled electrical steel sheet was subjected to tertiary cold rolling to a thickness of 50 µm, which was then subjected to secondary non-oxidizing annealing for 150 seconds in a hydrogen atmosphere (dew point temperature of -40°C) at the temperature listed in Table 1 below. Through electron backscatter diffraction (EBSD) analysis, the Goss fraction of grains and the number of strips composed of {111}//ND grains were obtained. The iron loss distribution was obtained while changing the applied frequency from 50 to 20000 Hz and summarized in Table 1.

Comparative Material 4 is an example in which primary non-oxidizing annealing was omitted and tertiary cold annealing was performed, and Comparative Material 5 is an example in which tertiary cold rolling and secondary non-oxidizing annealing were omitted and the process was completed at the primary non-oxidizing annealing.

**(Table 1)**

| Remarks | Heat treatment temperature (°C) | Goss fraction (%) | Density of strips (/100 mm²) | Iron loss (W/Kg) | | | |
|---|---|---|---|---|---|---|---|
| | | | | W_{15/50} | W_{10/400} | W_{2/5000} | W_{0.5/20000} |
| Comparative Material 1 | 600 | 2 | 0 | 5.20 | 27.50 | 17.20 | 11.40 |
| Comparative Material 2 | 700 | 5 | 0 | 2.40 | 12.40 | 11.40 | 7.91 |
| Inventive Material 1 | 800 | 67 | 72 | 1.06 | 6.34 | 10.50 | 3.52 |
| Inventive Material 2 | 850 | 76 | 86 | 0.99 | 7.15 | 10.10 | 3.14 |
| Inventive Material 3 | 880 | 66 | 165 | 0.98 | 7.15 | 10.20 | 2.94 |
| Inventive Material 4 | 900 | 76 | 111 | 0.95 | 7.55 | 9.45 | 2.75 |
| Inventive Material 5 | 930 | 55 | 177 | 0.95 | 7.85 | 9.67 | 2.45 |
| Inventive Material 6 | 950 | 78 | 133 | 0.87 | 7.34 | 10.11 | 2.86 |
| Inventive Material 7 | 970 | 69 | 188 | 0.99 | 8.01 | 9.87 | 2.33 |
| Inventive Material 8 | 980 | 80 | 115 | 1.00 | 7.45 | 9.99 | 2.87 |
| Inventive Material 9 | 1000 | 48 | 29 | 0.99 | 7.36 | 9.54 | 3.19 |
| Comparative Material 3 | 1100 | 11 | 2 | 1.12 | 11.50 | 12.50 | 8.52 |
| Comparative Material 4 | 900 | 8 | 70 | 1.88 | 12.44 | 12.34 | 8.44 |
| Comparative Material 5 | (omitted) | 75 | 0 | 1.14 | 8.99 | 19.22 | 16.72 |

As shown in Table 1, it can be seen that large numbers of Goss grains and strip shapes of {111}//ND grains were formed depending on the temperature in the secondary non-oxidizing annealing process, which reduces the high-frequency iron loss.

In Comparative Material 1 and Comparative Material 2 where the temperature of the secondary non-oxidizing annealing was too low, it can be seen that recrystallization was not completed and large numbers of Goss grains and strip shapes of {111}//ND grains were not formed.

In Comparative Material 3 where the temperature of the secondary non-oxidizing annealing was too high, it can be seen that large numbers of Goss grains and strip shapes of {111}//ND grains were not formed during the recrystallization growth process.

It can be seen that in Comparative Material 4, a large number of strip shapes of {111}//ND grains were formed, but many Goss grains were not formed, resulting in deterioration in high-frequency iron loss, and in Comparative material 5, a large number of Goss grains were formed, but many {111}//ND grains were not formed, and the high-frequency iron loss was relatively deteriorated.

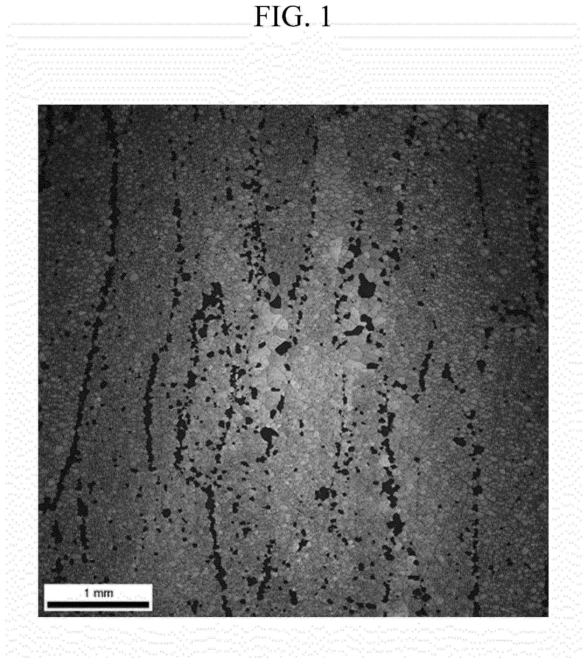

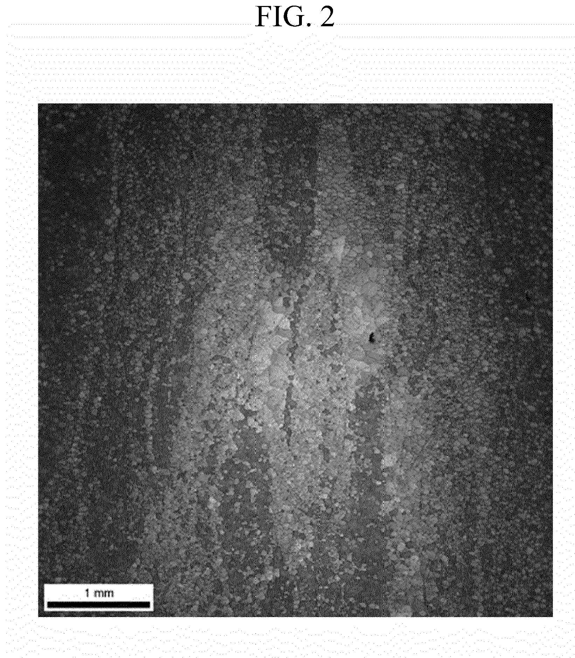

FIG. 1 is a photograph by an electron microscope obtained by analyzing a surface of a grain oriented electrical steel sheet manufactured using Inventive Material 5, in which {111}//ND grains are shown in blue. It can be seen that grains with {111}//ND orientation are continuously aligned in a strip shape. FIG. 2 is a photograph showing Goss ({110}<001>) grains in green. It can be seen that most of the Goss grains are distributed between the strip shapes in which {111}//ND grains of FIG. 2 are aligned.

It will be understood by one skilled in the art to which the present invention belongs that the present invention is not limited to the above exemplary embodiments and/or the examples, but can be manufactured in a variety of different forms, and can be implemented in other specific forms without changing the technical spirit or essential features of the present invention. Therefore, the exemplary embodiments and/or the examples described above should be understood as illustrative in all respects and not for purposes of limitation.

## Claims

1. A method for manufacturing a grain oriented electrical steel sheet, comprising:
manufacturing a hot-rolled steel sheet by hot rolling a slab;
subjecting the hot-rolled steel sheet to hot-rolled steel sheet annealing;
subjecting the hot-rolled steel sheet annealed hot-rolled steel sheet to primary cold rolling;
subjecting the primarily cold-rolled steel sheet to primary decarburization annealing;
subjecting the primarily decarburization-annealed steel sheet to secondary cold rolling;
subjecting the secondarily cold-rolled steel sheet to secondary decarburization annealing;
subjecting the secondarily decarburization-annealed steel sheet to primary non-oxidizing annealing of annealing the steel sheet at a temperature ranging from 1000°C to 1200°C and a dew point temperature of -20°C or lower;
subjecting the primarily non-oxidizing annealed steel sheet to tertiary cold rolling; and
subjecting the tertiarily cold-rolled steel sheet to secondary non-oxidation annealing of annealing the steel sheet at a soaking temperature ranging from 750°C to 1050°C for 30 seconds to 5 minutes.

2. The method of claim 1, wherein
the slab comprises 1.0 wt% to 4.0 wt% of Si, 0.1 wt% to 0.4 wt% of C, and a balance of Fe and unavoidable impurities.

3. The method of claim 2, wherein
the slab further comprises 0.1 wt% or less of Mn and 0.005 wt % or less of S.

4. The method of claim 1, wherein
the hot-rolled steel sheet annealing comprises decarburization.

5. The method of claim 1, wherein
in the hot-rolled steel sheet annealing, the annealing is performed at a temperature ranging from 850°C to 1000°C and a dew point temperature of 70°C or lower.

6. The method of claim 1, wherein
in the primary decarburization annealing, the annealing is performed at a temperature ranging 850°C to 1000°C and a dew point temperature of 50°C to 70°C.

7. The method of claim 1, wherein
in the primary decarburization annealing, the annealing is performed in an austenite single phase region or a region where a composite phase of ferrite and austenite is present.

8. The method of claim 1, wherein
after the primary decarburization annealing, an average diameter of grains is 150 to 250 µm.

9. The method of claim 1, wherein
the primary decarburization annealing and the secondary cold rolling are repeated two or more times.

10. The method of claim 1, wherein
in the secondary decarburization annealing, the annealing is performed at a temperature ranging from 850°C to 1000°C and a dew point temperature ranging from 50°C to 70°C.

11. The method of claim 1, wherein
in the secondary decarburization annealing, the annealing is performed for 30 seconds to 5 minutes.

12. The method of claim 1, wherein
in the primary non-oxidizing annealing, the annealing is performed for 30 seconds to 5 minutes.

13. The method of claim 1, wherein
the primary non-oxidizing annealing further comprises subjecting the steel sheet to subsequent pickling.

14. The method of claim 1, wherein
in the secondary non-oxidizing annealing, the annealing is performed in an atmosphere where a dew point temperature is -20°C or lower.

15. A grain oriented electrical steel sheet in which grains in which a {111} plane forms an angle of 15° or less with a rolling surface of the steel sheet are continuously aligned in a strip shape, an aspect ratio of the strip shape is 10 or greater, and a density of the strip shapes is 5 to 1000 per 100 mm².

16. The grain oriented electrical steel sheet of claim 15, wherein
a density of grains in which the {111} plane forms the angle of 15° or less with the rolling surface of the steel sheet is 500 to 100,000 grains per 100 mm².

17. The grain oriented electrical steel sheet of claim 15, wherein
a fraction of grains having a grain diameter of 10 µm to 100 µm among all grains is 20% to 99%.

18. The grain oriented electrical steel sheet of claim 15, wherein
a fraction of grains forming an angle of 15° or less with a Goss direction is 10% to 95%.

19. The grain oriented electrical steel sheet of claim 15, wherein
the electrical steel sheet comprises 1.0 wt% to 4.0 wt% of Si, 0.005 wt% or less of C (excluding 0 wt%), and a balance of Fe and inevitable impurities.

20. The grain oriented electrical steel sheet of claim 18, wherein
the electrical steel sheet further comprises 0.1 wt% or less of Mn and 0.005 wt % or less of S.
